# EUROPÄISCHE PATENTSCHRIFT

(11) **EP 0 335 206 B1**
(45) Veröffentlichungstag und Bekanntmachung des Hinweises auf die Patenterteilung: **05.01.1994**
(21) Anmeldenummer: 89104854.8
(22) Anmeldetag: 17.03.1989
(51) Int. Cl.: A45D 19/06, A45D 44/06

(54) **Haltevorrichtung für Friseurgeräte**
Supporting device for hairdresser apparatus
Dispositif de support d'appareil de coiffeur

(30) Priorität: 28.03.1988 DE 3810510
(43) Veröffentlichungstag der Anmeldung: 04.10.1989
(73) Patentinhaber: R.+L. THOMAS GmbH & Co. KG, D-45257 Essen (DE)
(72) Erfinder: Nix, Horst, D-8011 Vaterstetten (DE)
(74) Vertreter: Schütz, Peter, Dipl.-Ing.

(56) Entgegenhaltungen:
- DE-A- 1 962 707
- DE-A- 2 109 751

## Beschreibung

Die Erfindung betrifft eine Haltevorrichtung für Friseurgeräte mit den im Oberbegriff des Anspruchs 1 angegebenen Merkmalen.

Aus der DE-PS 21 09 751 ist eine derartige Haltevorrichtung bekannt. Sie besteht aus einem um die Vertikale schwenkbaren Grundparallelogramm, das unten an einem am Boden befestigten Ständer drehbar gelagert ist und an seinem oberen Ende ein waagerecht verlaufendes Ansatzparallelogramm trägt, auf dem ein Haarwaschbecken drehbar gelagert ist. Grundparallelogramm und Ansatzparallelogramm bestehen jeweils aus zwei langen Lenkern, die an ihren Enden durch zwei kurze Lenker verbunden sind. Mit Hilfe des Grundparallelogramms läßt sich das Waschbecken heranziehen und wegschieben, während es sich mit dem Ansatzparallelogramm höher oder tiefer stellen läßt. Im bekannten Falle verlaufen die kurzen Lenker des Grundparallelogrammes waagerecht und die des Ansatzparallelogramms senkrecht. An der Verbindungsstelle beider Parallelogramme kreuzen sich deren kurze Lenker also unter einem rechten Winkel, unter dem sie miteinander fest verbunden sind. Das Grundparallelogramm hat seine größte Breite und damit höchste Stabilität in seiner senkrechten Lage, während es jedoch beim Gebrauch des Waschbeckens nach vorn geneigt ist. Aus praktischen Gründen hat man die Endpositionen des Schwenkbereichs bei etwa 45° Neigung nach vorn und 15° nach hinten festgelegt. Um die Abmessungen des Schwenkgestells möglichst klein zu halten, macht man das Grundparallelogramm so kurz, daß das Ansatzparallelogramm beim Gebrauch des Waschbeckens nach oben geschwenkt ist, um auf die erforderliche Beckenhöhe zu kommen. Auch hier wird die maximale Breite und damit Stabilität des Ansatzparallelogramms nicht im Bereich der am häufigsten vorkommenden Gebrauchsstellungen erreicht.

Bei einer weiteren aus der US-PS 3 713 453 bekannten Haltevorrichtung für ein Haarstyling-Gerät ist das Grundparallelogramm in einer Wandhalterung seitlich schwenkbar gelagert, wozu sein gegen die Waagerechte geneigter kurzer Lenker mit einem senkrechten Zapfen in eine an der Wand befestigte Lagerbuchse ragt. Die beiden langen Lenker des Grundparallelogramms lassen sich in etwa zwischen einer waagerechten und einer nach oben gerichteten senkrechten Lage bewegen. Das Ansatzparallelogramm ist etwa genausolang wie das Grundparallelogramm und trägt an seinem diesem abgewandten Ende eine in einer Glocke befindliche Heizlampe zur lokalen Erwärmung bestimmter Haarbereiche.

Ferner ist aus dem Buch "Getriebelehre" von Otto Kraemer, Verlag G. Braun, Karlsruhe, 1950, Seiten 149/150 ein Parallelkurbelgetriebe bekannt, wie es für eine Zeichenmaschine (Bild 311) oder für einen parallelgeführten Gerätetisch (312) verwendbar ist. Diese Anwendungsgebiete haben jedoch nichts mit Friseurgeräten zu tun.

Der Erfindung liegt die Aufgabe zugrunde, die aus der DE-PS 21 09 751 bekannte Haltevorrichtung dahingehend zu verbessern, daß in den am häufigsten verwendeten Betriebsstellungen des Waschbeckens sowohl das Grundparallelogramm als auch das Ansatzparallelogramm eine maximale Breite und damit Stabilität haben. Diese Aufgabe wird durch die im Kennzeichenteil des Anspruchs 1 angegebenen Merkmale gelöst.

Durch die Schrägstellung der kurzen Lenker des Grundparallelogramms steht dieses bei Rechtwinkligkeit seiner Gelenke nicht senkrecht, sondern unter derjenigen Neigung, die beim Gebrauch am häufigsten vorkommt, so daß es die in diesem Falle benötigte maximale Stabilität hat. Die gleichzeitige Anwendung dieses Erfindungsgedankens auch beim Ansatzparallelogramm ist ebenfalls vorgesehen, dessen kurze Lenker ebenfalls so weit schräggestellt werden, daß es in der häufigsten Gebrauchsstellung ein Rechteck bildet.

Weitere Ausgestaltungen der Erfindung ergeben sich aus den Unteransprüchen.

Es sei nun ein in den beiliegenden Zeichnungen veranschaulichtes Ausführungsbeispiel erläutert. Es zeigen:
- Fig. 1: eine schematische Darstellung einer bekannten Haltevorrichtung;
- Fig. 2: eine entsprechende Darstellung der erfindungsgemäßen Haltevorrichtung; und
- Fig. 3: einen Ausschnitt aus Fig. 2 zur Veranschaulichung der Verbindungsstelle zwischen Grund- und Ansatzparallelogramm.

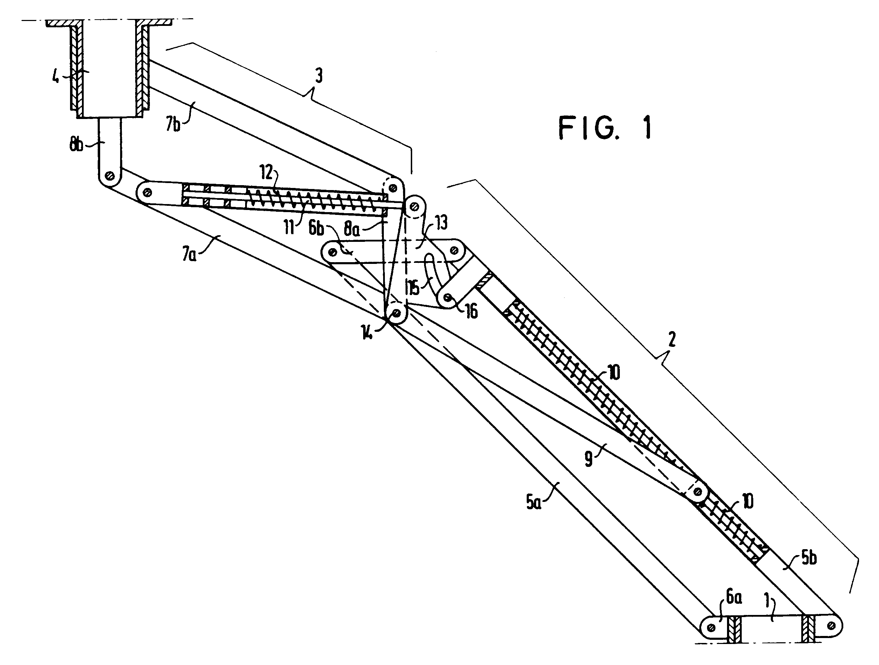

Fig. 1 veranschaulicht die aus der eingangs genannten Patentschrift bekannte Vorrichtung mit einem am Boden befestigten Ständer 1, an dem das Grundparallelogramm 2 um eine lotrechte Achse drehbar gelagert ist. Oben am Grundparallelogramm 2 sitzt ein Ansatzparallelogramm 3, welches eine Halterung 4 für ein Haarwaschbecken trägt. Das Grundparallelogramm besteht aus zwei langen Lenkern 5a und 5b und zwei kurzen Lenkern 6a, 6b, das Ansatzparallelogramm hat ebenfalls zwei lange Lenker 7a und 7b und zwei kurze Lenker 8a und 8b. Ferner erkennt man im Grundparallelogramm 2 eine am langen Lenker 5a angelenkte Strebe 9, deren anderes Ende am langen Lenker 5b geführt ist und sich dort gegen Federn 10 abstützt, um einen Federgewichtsausgleich zu bilden. Am langen Lenker 7a des Ansatzparallelogramms ist ebenfalls eine Strebe 11 angelenkt, die eine Feder 12 enthält und mit ihrem anderen Ende an einem Kulissenführungsteil 13 angelenkt ist, das um den Gelenkpunkt 14 des Ansatzparallelogrammes schwenkbar gelagert ist. In der Kulisse 15 des Kulissenführungsteils 13 gleitet als Kulissenstein ein Stift 16, der fest gegenüber dem rechten langen Lenker 5b des Grundparallelogramms gehaltert ist. Durch das Zusammenwirken dieses Stiftes mit der Kulisse wird beim Schwenken des Grundparallelogramms 2 gleichzeitig das Ansatzparallelogramm 3 so geschwenkt, daß das in der Halterung 4 gelagerte Waschbecken eine rein waagerechte Bewegung ohne Veränderung seiner Höhe durchführt.

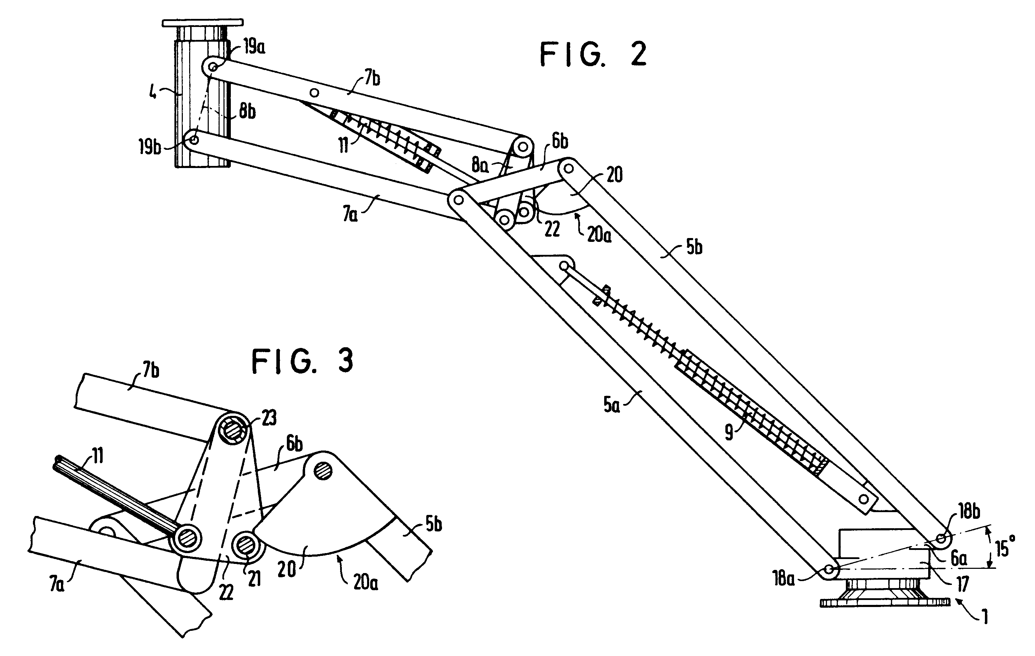

Fig. 2 zeigt nun eine entsprechend Darstellung der erfindungsgemäßen Ausbildung des Grundparallelogramms und des Ansatzparallelogramms, wobei einander entsprechende Teile mit den gleichen Bezugsziffern wie in Fig. 1 bezeichnet sind. Im Gegensatz zu Fig. 1, wo die kurzen Lenker 6a und 6b des Grundparallelogramms waagerecht verlaufen, sind sie in Fig. 2 unter einem Schrägwinkel angeordnet, der im speziellen Fall 15° gegenüber der Waagerechten beträgt. Auch verlaufen die kurzen Lenker 8a und 8b des Ansatzparallelogramms nicht senkrecht, sondern ebenfalls um einen Schrägwinkel zur Lotrechten, der beispielsweise auch 15° betragen kann. Die kurzen Lenker 8a und 6b des Ansatz- und des Grundparallelogramms sind nicht rechtwinklig miteinander verbunden, sondern unter einem um die Summe der beiden Schrägwinkel von Grund- und Ansatzparallelogramm kleineren Winkel als 90°. Im vorliegenden Beispiel sind die Grenzen des Schwenkbereichs des Grundparallelogramms 2 bei 45° Neigung nach vorne und 15° Neigung nach hinten gewählt, so daß das Grundparallelogramm in seiner Mittelstellung um 15° gegen die Senkrechte geneigt ist, also gerade um denselben Winkel wie der Schrägwinkel seiner kurzen Lenker gegen die Waagerechte. Die Parallelogrammwinkel sind daher in dieser Mittellage des Arbeitsbereiches rechte Winkel, bei denen das Parallelogramm seine größte Breite und damit Stabilität hat Entsprechend ist der Schrägwinkel der kurzen Lenker des Ansatzparallelogrammes gegen die Lotrechte ebenfalls so gewählt, daß auch dieses Parallelogramm in der Mittelstellung seines Schwenkbereiches ein Rechteck bildet, also seine maximale Breite und Stabilität hat.

Wie man sieht, bildet der um einen in der Figur nicht gezeichneten Zapfen des Ständers 1 drehbare Lagerring 17 durch Anordnung der beiden Gelenkaugen 18a und 18b in unterschiedlicher Höhe gleichzeitig den kurzen Lenker 6a des Grundparallelogramms. Entsprechend bildet die Lagerhülse der Halterung 4 durch gegenüber der Mittelachse versetzte Anordnung der Lageraugen 19a und 19b den äußeren kurzen Lenker 8b des Ansatzparallelogramms.

Fig. 3 zeigt als Ausschnitt den Verbindungsbereich zwischen Grund- und Ansatzparallelogramm mit dem die waagerechte Führung der Halterung 4 mit dem Becken erzwingenden Mechanismus, der im Zusammenhang mit Fig. 1 bereits erwähnt wurde und der hier etwas anders ausgestaltet ist. Am langen Lenker 5b des Grundparallelogramms ist hier eine Kurvenplatte 20 befestigt, die dem Kulissenführungsteil 13 nach Fig. 1 entspricht und an ihrer Unterseite mit einer Kurve 20a ausgebildet ist, die gegen einen als Rolle 21 ausgebildeten Finger einer Schwinge 22 drückt, die ihrerseits am oberen Gelenkpunkt 23 des Ansatzparallelogrammes schwenkbar gelagert ist. An der Schwinge 22 ist ferner die Strebe 11 mit einem Ende angelenkt, die mit ihrem anderen Ende am oberen langen Lenker 7b des Ansatzparallelogrammes gelagert ist. Bei einer Schwenkbewegung des Grundparallelogrammes gleitet die Rolle 21 entlang der Kurve 20 und schwenkt dabei um den Gelenkpunkt 23, wodurch die Strebe 11 verschoben wird und das Ansatzparallelogramm so verstellt, daß dessen Bewegung mit derjenigen des Grundparallelogramms so abgestimmt ist, daß die Halterung 4 beim seitlichen Wegschieben des Waschbeckens ihre Höhe nicht verändert. Der Verlauf der Kurve 20 der Kurvenplatte 19 ist in diesem Sinne gewählt.

## Patentansprüche

1. Haltevorrichtung für Friseurgeräte mit einem schwenkbaren Grundparallelogramm aus je zwei kurzen und langen Lenkern, von denen ein kurzer Lenker um einen Festpunkt seitlich drehbar ist, während der andere kurze Lenker mit einem kurzen Lenker eines weiteren, in der gleichen Ebene schwenkbaren Ansatzparallelogramms fest verbunden ist, dessen zweiter kurzer Lenker das in einer Halterung um 360° drehbare Friseurgerät trägt, und mit einem Federgewichtsausgleich, **dadurch gekennzeichnet**, daß die kurzen Lenker (6a,6b) des Grundparallelogrammes (2) unter einem solchen Schrägwinkel zur Waagerechten angeordnet sind, daß in der Mittelposition des Grundparallelogrammes zwischen den beiden Endpositionen seines Schwenkbereiches seine Parallelogrammwinkel zumindest näherungsweise rechte Winkel sind, und daß die kurzen Lenker (8a,8b) des Ansatzparallelogramms (3) unter einem solchen Winkel zur Senkrechten angeordnet sind, daß in der Mittelposition des Ansatzparallelogramms zwischen den beiden Endpositionen seines Schwenkbereiches seine Parallelogrammwinkel im Bereich um 90° liegen.

2. Haltevorrichtung nach Anspruch 1, **dadurch gekennzeichnet**, daß der Schrägwinkel 15° beträgt.

3. Haltevorrichtung nach Anspruch 1 oder 2, **dadurch gekennzeichnet**, daß mit dem oberen langen Lenker (5b) des Grundparallelogramms (2) an seinem oberen Gelenkpunkt eine Kurvenplatte (20) befestigt ist, die mit einer unterhalb dieses Gelenkpunktes verlaufenden Kurve (20a) ausgebildet ist, daß ferner am oberen Gelenkpunkt (23) des mit dem oberen kurzen Lenker (6b) des Grundparallelogramms verbundenen kurzen Lenker (8a) des Ansatzparallelogramms (2) eine Schwinge (22) gelagert ist, die mit einem Finger (Rolle 21) an der Kurve (20a) entlang geführt wird und an der außerdem eine zu einem entfernten Punkt des oberen langen Lenkers (7b) des Ansatzparallelogramms führende Strebe (11) angelenkt ist, und daß der Verlauf der Kurve (20a) so gewählt ist, daß bei einer Schwenkbewegung des Grundparallelogramms (2) die Halterung (4) für das Friseurgerät waagerecht geführt wird.

4. Haltevorrichtung nach Anspruch 1, **dadurch gekennzeichnet**, daß die Strebe (11) als Federausgleichsaggregat ausgebildet ist.

## Claims

1. Support apparatus for hairdressing devices with a pivotable base parallelogram linkage comprising two short levers and two long levers, of which one short lever is laterally rotatable about a fixed point whilst the other short lever is rigidly connected to a short lever of a further auxiliary parallelogram linkage which is pivotable in the same plane and whose second short lever carries the hairdressing device, which is rotatable through 360° in a mounting, and with a spring weight compensator, characterised in that the short levers (6a, 6b) of the base parallelogram (2) are arranged at such an oblique angle to the horizontal that in the central position of the base parallelogram linkage between the two end positions of its pivotal range its parallelogram angles are at least approximately right angles and that the short levers (8a, 8b) of the auxiliary parallelogram linkage (3) are arranged at such an angle to the vertical that in the central position of the auxiliary parallelogram linkage between the two end positions of its pivotal range its parallelogram angles lie in the range around 90°.

2. Support apparatus as claimed in claim 1, characterised in that the oblique angle is 15°.

3. Support apparatus as claimed in claim 1 or 2, characterised in that fastened to the upper long lever (5b) of the base parallelogram linkage (2) at its upper joint point there is a cam plate (20) which is formed with a cam (20a) extending below this joint point, that further mounted at the upper joint point (23) of the short lever (8a) of the auxiliary parallelogram linkage (2) which is connected to the upper short lever (6b) of the base parallelogram linkage, there is a rocking arm (22) which is guided with a finger (roller 21) along the cam (20a) and also pivotally connected to which is a strut (11), which leads to a remote point on the upper long lever (7b) of the auxiliary parallelogram linkage, and that the shape of the cam (20a) is so selected that when the base parallelogram linkage (2) moves pivotally the mounting (4) for the hairdressing device is guided horizontally.

4. Support apparatus as claimed in claim 1, characterised in that the strut (11) is constructed as a spring compensating unit.

## Revendications

1. Dispositif de support pour un appareil de coiffeur, comportant un parallélogramme articulé principal, constitué de deux branches courtes et de deux branches longues, parmi lesquelles une branche courte est montée à rotation latéralement autour d'un point fixe tandis que l'autre branche courte est reliée rigidement à une branche courte d'un autre parallélogramme auxiliaire articulé dans le même plan, dont la seconde branche courte porte l'appareil de coiffeur monté à rotation de 360° dans un support, et un dispositif d'équilibrage du poids à ressort, caractérisé en ce que les branches courtes (6a,6b) du parallélogramme principal (2) sont disposées suivant un angle d'inclinaison, par rapport à l'horizontale, tel que dans la position moyenne du parallélogramme principal, entre les deux positions extrêmes de sa plage d'articulation, les angles de ce parallélogramme sont au moins approximativement des angles droits et en ce que les branches courtes (8a,8b) du parallélogramme auxiliaire (3) sont disposées, par rapport à la verticale, suivant un angle tel que dans la position moyenne du parallélogramme auxiliaire, entre les deux positions extrêmes de sa plage d'articulation, l'angle du parallélogramme est de l'ordre de 90°

2. Dispositif de support suivant la revendication 1 caractérisé en ce que l'angle d'inclinaison est de 15°.

3. Dispositif de support suivant l'une quelconque 1 ou 2 des revendications caractérisé en ce qu'au point d'articulation supérieur de la branche longue supérieure (5b) du parallélogramme principal (2) est fixée une plaque à came courbe (20) qui est formée avec une surface de came (20a) s'étendant en dessous de ce point d'articulation, en ce qu'au point d'articulation supérieur (23) de la branche courte (8a) du parallélogramme auxiliaire (2) qui est reliée à la branche courte supérieure (6b) du parallélogramme principal est monté une bielle oscillante (22) qui est guidée le long de la surface de came (20a) au moyen d'un doigt (galet 21) et qui est articulée sur une jambe de force (11) s'étendant jusqu'à un point éloigné de la branche longue supérieure (7b) du parallélogramme auxiliaire, et en ce que le profil de la surface de came (20a) est choisie de telle façon que lors d'un mouvement de pivotement du parallélogramme (2), le support (4) de l'appareil de coiffeur est guidé horizontalement.

4. Dispositif de support suivant la revendication 1 caractérisé en ce que la jambe de force (11) est réalisée sous la forme d'un mécanisme d'équilibrage à ressort.
